# EUROPEAN PATENT SPECIFICATION

(11) **EP 3 048 848 B1**
(45) Date of publication and mention of the grant of the patent: **20.05.2020**
(21) Application number: 15305080.2
(22) Date of filing: 26.01.2015
(51) Int. Cl.: H04W 72/12

(54) **A LOW COST/COMPLEXITY UE DEVICE, A METHOD AND A COMPUTER PROGRAM PRODUCT**
KOSTENGÜNSTIGE/UNKOMPLIZIERTE UE-VORRICHTUNG, VERFAHREN UND COMPUTERPROGRAMMPRODUKT
DISPOSITIF UE À FAIBLE COÛT/COMPLEXITÉ, PROCÉDÉ ET PRODUIT DE PROGRAMME INFORMATIQUE

(43) Date of publication of application: 27.07.2016
(73) Proprietor: Nokia Technologies Oy, 02610 Espoo (FI)
(72) Inventor: LIM, Seau Sian, Swindon, Wiltshire SN5 7DJ (GB); WONG, Shin Horng, Swindon, Wiltshire SN5 7DJ (GB); YE, Sigen, Murray Hill, NJ 07974-0636 (US); Palat, Sudeep, Swindon, Wiltshire SN5 7DJ (GB)
(74) Representative: Bryers LLP

(56) References cited:
- WO-A1-2013/127453
- US-A1- 2013 083 753
- US-A1- 2013 315 159

## Description

### TECHNICAL FIELD

Aspects relate, in general, to a low cost/complexity user equipment device, a method for managing resources and to a computer program product.

### BACKGROUND

Wireless telecommunication systems are widely deployed to provide various types of communication content such as voice, data, and so on between wireless terminals in communication with one or more base stations via transmissions on forward and reverse links. For example, LTE is a mobile broadband wireless communication technology in which transmissions from base stations (referred to as eNodeBs or eNBs and so on) to user terminals (referred to as user equipment, or UEs) are sent using orthogonal frequency division multiplexing (OFDM). UE devices may include cellular telephones, smart phones, personal digital assistants (PDAs), wireless modems, handheld devices, laptop computers, netbooks, and so on. A Low Cost/Complexity (LC) UE device is typically specified with the aim of reducing the UE cost or complexity by, for example, using only a single receive antenna, limiting TBS in the downlink and uplink for unicast to 1000 bits. Further reductions in the costs of UEs can include restricting the device RF bandwidth to 1.4 MHz for example. Some low cost/complexity (LC) UEs may be considered machine type communication (MTC) UEs that can be used by a machine for a specific application. For example, an LC MTC UE may be used with a smart meter or to provide a location tag, which may, for example, be placed in the basement of a building (e.g. if it is for use with a smartmeter) or in a tunnel (for railway signaling for example). In both cases, the UE will have poor coverage.

US 2013/083753A1 describes a system and method for supporting communication at a reduced bandwidth using, for example, ePDCCH.

US 2013/315159A1 describes a method for delay scheduling for MTC type devices.

### SUMMARY

The invention is defined by the appended claims. According to a first aspect of the invention, there is provided a bandwidth limited user equipment (UE) device in a connected mode of operation with a base station of a wireless telecommunication network, the base station operable to schedule the transmission of unicast and broadcast messages using a low complexity physical downlink control channel (LC-PDCCH), wherein the device is configured to monitor the LC-PDCCH common search space (CSS) and at the LC UE device to decode broadcast messages in selected subframes of the LC-PDCCH channel to obtain broadcast related information, wherein the selected subframes are broadcast subframes that are paging occasions for the LC UE device. In an example, the LC UE device can be a LC MTC UE device. The LC UE device can be configured to monitor a LC enhanced physical downlink control channel (LC-ePDCCH). The LC UE device can, at a given time, monitor or decode either one of a pair of control channels for providing scheduling information using a unicast or broadcast message transmitted by the base station. The LC UE device can have an RF bandwidth of 1.4 MHz. The LC device may be configured not to monitor the PDCCH UE specific search space (USS) in the selected subframes.

According to a second aspect of the invention, there is provided a method for managing resources in a wireless telecommunication network comprising a base station operable to schedule the transmission of unicast and broadcast messages using a low complexity physical downlink control channel (LC-PDCCH) for a bandwidth limited LC UE device in a connected mode of operation with the base station, the method comprising, at the LC UE, monitoring the LC-PDCCH common search space (CSS) and decoding broadcast messages in selected subframes of the LC-PDCCH channel to obtain broadcast related information, the selected subframes being broadcast subframes that are paging occasions for the LC UE device. The LC UE device can monitor a low complexity enhanced physical downlink control channel (LC-ePDCCH). Existing PDCCH can be provided over the full system bandwidth, and existing ePDCCH can be variable bandwidth configured by a network node. ePDDCH does not support CSS. In an example, ePDCCH used for LC UE devices is a subset of existing ePDCCH but which supports CSS.

The selected subframes can be system information block (SIB) type 1 subframes for the LC UE device. The selected subframes can be system information message subframes for the LC UE device. The LC UE device can prioritise LC-PDCCH CSS for RAR and subframes containing the RAR message over LC-PDCCH USS and unicast message. The selected subframes can be limited using the C-RNTI of the LC UE device. The LC UE device can, in connected mode, to monitor SIB1. The LC UE device can be configured so as not to monitor the LC-PDCCH UE specific search space (USS) in the selected subframes.

According to a third aspect of the invention, there is provided a computer program product, comprising a computer usable medium having computer readable program code embodied therein, said computer readable program code adapted to be executed to implement a method for managing resources as provided herein.

According to a fourth aspect of the invention, there is provided a base station of a wireless telecommunication network in a connected mode of operation with a bandwidth limited user equipment, LC UE, device, the base station operable to schedule the transmission of unicast and broadcast messages using a low complexity physical downlink control channel, LC-PDCCH, and to schedule broadcast messages comprising broadcast related information in selected subframes of the LC-PDCCH channel, wherein the selected subframes are broadcast subframes scheduled as paging occasions for the LC UE device.

### BRIEF DESCRIPTION OF THE DRAWINGS

Embodiments will now be described, by way of example only, with reference to the accompanying drawings, in which:
Figure 1 is a schematic representation of a portion of a wireless telecommunication network according to an example;
Figure 2 is a schematic representation of selected broadcast subframes for an LC UE according to an example; and
Figure 3 is a schematic representation of the periodicity for broadcast subframes according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof. Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Typically, the physical downlink control channel (PDCCH) is the control channel used to dynamically allocate resources and configuration for the physical downlink scheduling channel (PDSCH) in both broadcast and unicast cases. In the case of LC MTC UE, due to the reduction of RF bandwidth to 1.4MHz, PDCCH cannot be used because PDCCH spans the entire system bandwidth. In an example, the enhanced PDCCH (ePDCCH) or a low cost/complexity PDCCH (LC-PDCCH) or low cost/complexity enhanced PDCCH (LC-ePDCCH) may be used as control channel to dynamically allocate resources and configuration for broadcast and unicast PDSCH.

As the ePDCCH for broadcast and unicast PDSCH can be different in a given subframe, a UE with such an RF bandwidth restrictions may decode only either one or the other in a subframe. More generally, a LC UE cannot decode both a unicast and broadcast message at the same subframe. Basically, an LC UE can either decode an ePDCCH CSS or an ePDCCH USS or a broadcast message or a unicast message in one subframe.

In a legacy case, without bandwidth restrictions, the control channel for PDSCH does not have this issue as the UE can decode both the common search space (CSS) (for broadcast PDSCH) and the UE specific search space (USS) (for unicast PDSCH) on the PDCCH simultaneously. The only simultaneous reception of broadcast and unicast PDSCH for the TBS size restriction is left to UE implementation.

A legacy UE in a connected mode of operation (RRC_Connected) keeps track of the following broadcast PDCCH/PDSCH:
- PDCCH/PDSCH associated with paging for any PWS alert
- PDCCH/PDSCH associated with SI containing the SIBs if it is indicated by paging of any SIB changes and/or PWS transmission
- PDCCH/PDSCH associated with RAR after PRACH transmission (due to SR trigger or UL time alignment trigger due to UL data arrival)

In the legacy UE behavior, a RRC Connected UE may not have to read the paging at its paging occasion and can decode at other paging occasion as long as it monitors paging at least every default paging cycle. In this case, there is no way the network will know when the UE would decode the ePDCCH for paging.

In the case that a LC UE is able to receive only 1 ePDCCH due to bandwidth restrictions, the UE may continuously monitor ePDCCH for unicast PDSCH, in which case it will not be able to monitor ePDCCH for broadcast PDSCH. If, on the other hand, the UE autonomously monitors ePDCCH for broadcast PDSCH in some subframes and it is not known to the eNB with which it is in a connected mode of operation, the eNB may waste resources on unicast PDSCH. For example, in a non-coverage enhanced case, if it is left to the UE implementation to decide when to decode ePDCCH for broadcast PDSCH, resources for unicast PDSCH will be wasted at some subframes (i.e. ePDCCH for broadcast PDSCH and paging PDSCH) between the UE paging cycle, since the UE needs to decode paging once during a paging cycle. In the coverage enhanced case, resources for unicast PDSCH will be wasted on all the repetitions of the ePDCCH and also the paging PDSCH.

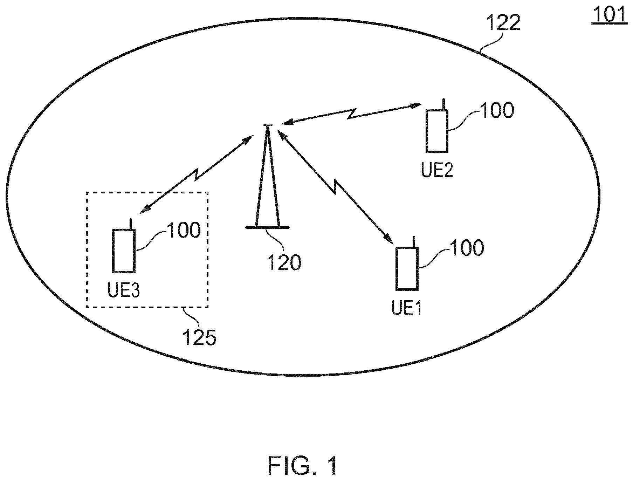

Figure 1 is a schematic representation of a portion of a wireless telecommunication network according to an example. The network 101 is operable for providing wireless communication services to user terminals 100. Three UE devices 100 are shown in figure 1. The UE 100 are LC UE devices, such as LC MTC UE devices. The portion of the network 101 shown in figure 1 can be for an LTE network or some other wireless network.

The mobile communication network 101 comprises a plurality of geographic cell areas or sectors 122. Each geographic cell area or sector 122 is served by a base station 120, which is generally referred to in LTE as an Evolved NodeB (eNodeB or eNB). One base station 120 may provide service in multiple geographic cell areas or sectors 122. UE 100 receive signals from base station 120 on one or more downlink (DL) channels, and transmit signals to the base station 120 on one or more uplink (UL) channels. In particular, the UEs 100, whether in RRC-IDLE mode or RRC_CONNECTED mode, maintain synchronization to the illustrated base station 120, and monitor control channels transmitted by base station 120.

Messages transmitted over the radio link from the node 120 to users (UE 100) can be broadly classified as control messages or data messages. Control messages are used to facilitate the proper operation of the system as well as proper operation of each UE within the system. Control messages include commands to control functions such as the transmitted power from a UE, signaling to identify resource blocks (RBs) within which data is to be received by the UE or transmitted from the UE, and so on.

In an example, at least one of the UE 100 may be provided or otherwise located in an area of limited reception. For example, as noted above, UE3 can be an LC UE device that is in a basement of a building 125 for example, and which therefore suffers from a poor reception, and which has certain structural and functional differences from other UE (e.g. UE1 and UE2) as described herein that limit its ability monitor and/or decide control channels.

According to an embodiment, broadcast subframes are defined during which a LC UE is not expected to monitor the ePDCCH USS (UE Specific Search Space), i.e., for unicast messages. An eNB therefore schedules broadcast related or scheduling information e.g. ePDCCH CSS for broadcast messages and the related broadcast messages during these broadcast subframes.

In an embodiment, an LC UE device monitors LC-EPDCCH CSS or broadcast messages rather monitoring both. For example, some broadcast message may not be scheduled by LC-EPDCCH, e.g. it may decide that SIB is not scheduled using EPDCCH.

The said broadcast subframes are paging occasions defined for an LC UE in a connected mode of operation. Such paging occasions are only used in idle mode (RRC_Idle). During such paging occasions or broadcast subframes, the UE will monitor for possible paging messages at the subband containing the scheduling for paging messages and/or the paging message itself (or if that paging message does not have an associated DCI). In this case, the UE/eNB knows all the possible paging occasions and can avoid unnecessarily monitoring for ePDCCH USS or unicast messages during those paging occasions/broadcast subframes.

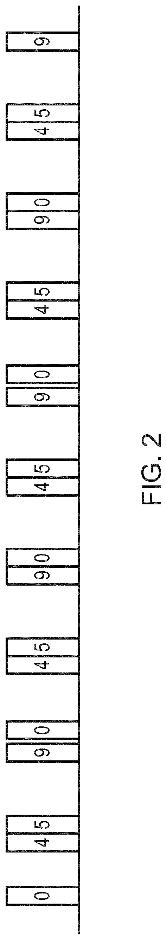

Figure 2 is a schematic representation of selected broadcast subframes for an LC UE according to an example. In the example of figure 2, legacy paging occasions of subframes 0, 4, 5 and 9 (depicted) are selected. However, in the case of coverage enhanced, there may be too many broadcast subframes if additional subframes are required due to the need for repetition on the ePDCCH CSS for paging messages and on the paging messages. Since the eNB knows that a LC UE is in an RRC_Connected mode of operation, the broadcast subframes of a LC UE are limited to its own paging occasions (based on C-RNTI for example) or configured periodic broadcast subframes. In an example, periodicity is the default paging cycle, for receiving paging alerts.

According to an example, periodic broadcast subframes for receiving paging alerts for an LC UE in a connected mode of operation can be configured. The periodicity can be set to the default paging cycle for example.

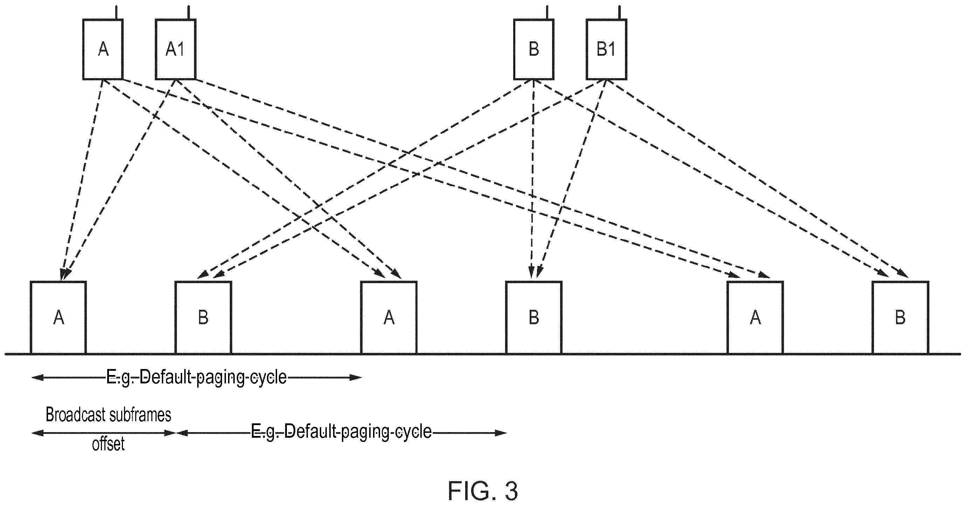

Figure 3 is a schematic representation of the periodicity for broadcast subframes according to an example. In the case of figure 3, a UE is configured with periodic broadcast subframes set in which the UE will monitor ePDCCH CSS for paging messages and associated paging messages. For example, LC UE UE A and A1 are configured with periodic broadcast subframe A while LC UE UE B and B1 are configured with periodic broadcast subframe B.

In another embodiment the said broadcast subframes are CSS containing PWS alert. This can be realised by coding the CSS with special P-RNTI or using some bits in the DCI (Downlink Control Indicator) to indicate that it is PWS alert.

In another embodiment the said broadcast subframes is CSS containing EAB modification. This can be realised by coding the CSS with special P-RNTI or using some bits in the DCI (Downlink Control Indicator) to indicate that there is EAB modification.

In another embodiment the said broadcast subframes is CSS containing scheduling information for SIB1 and the SIB1. This recognizes that any modification to the SI would be indicated in the value tag found in SIB1 and hence there is no need to page the UE for SI modifications. Also, the PWS alert and the EAB (Extended Access class Barring) change can be added to SIB 1 and there is no need to page the UE for PWS alert and EAB modification. The LC UE would directly monitor SIB1 for any value tag change and PWS alert.

In another embodiment, the said broadcast subframe is a subframe containing SIB1. If SIB1 is not scheduled by a DCI in the ePDCCH CSS, then the LC UE would already know the scheduling info for SIB1 and hence can directly monitor for any value tag changes in SIB1 message.

It should be appreciated that in the above two embodiments, the eNB may not be able to schedule unicast for LC UEs in subframes containing SIB1 and/or SIB1 scheduling info. Since the SIB can only change during modification periods, the UE can be configured to monitor only a subset of these subframes containing SIB1 and/or SIB1 scheduling info during a SIB modification period. This allows the eNB to schedule unicast message in some of these subframes.

For the SI reading, subframes containing the SI can only be assumed to be in the broadcast subframes when there is a change of the SIB. Since SIB can only be changed at the boundary of the modication period, the eNB can determine that the UE will be reading the SIB at the next modification period. Hence another embodiment:

In another embodiment, the broadcast subframes can include the subframes containing the SI at the next BCCH modification period after receiving the SIB change indication in the previous BCCH modification period, and may apply for only 1 BCCH modification period. Such broadcast subframes can be autonomously added to the configured broadcast subframes by the UE and eNB for the duration of the next BCCH modification period. That is, these subframes cannot be configured by the eNB since System Information may change at any time during a modification period.

When LC UE is performing random access, a random access response message (i.e. RAR) is sent, as is typically known. Such messages are also scheduled by LC-PDCCH CSS. As an eNB does not know when the UE may perform random access, it cannot be included in the broadcast subframes configured by the eNB. In such cases, the UE can prioritise the LC-PDCCH CSS for the RAR and the RAR message over the LC-PDCCH USS and unicast message.

In an example, a LC UE device can be a LC MTC UE device operable to provide communication functionality for a device that does not require human intervention. For example, as noted above, a LC MTC UE device can be provided in the form of a smart meter, a location tag and so on. Accordingly, references herein to an LC UE device in general can include reference to an LC MTC UE device and vice versa.

## Claims

1. A bandwidth limited user equipment device (100) in a connected mode of operation with a base station (120) of a wireless telecommunication network (101), the base station operable to schedule the transmission of unicast and broadcast messages using a low complexity physical downlink control channel,
wherein the device is configured to:
monitor the low complexity physical downlink control channel common search space, and at the bandwidth limited user equipment device to decode broadcast messages in selected subframes of the low complexity physical downlink control channel to obtain broadcast related information,
**characterised in that**:
the selected subframes are broadcast subframes that are paging occasions for the bandwidth limited user equipment device.

2. A bandwidth limited user equipment device as claimed in claim 1, wherein the device is configured to monitor a low complexity enhanced physical downlink control channel.

3. A bandwidth limited user equipment device as claimed in claim 1 or 2, wherein the bandwidth limited user equipment device is operable, at a given time, to monitor or decode either one of a pair of control channels for providing scheduling information using a unicast or broadcast message transmitted by the base station.

4. A bandwidth limited user equipment device as claimed in any preceding claim, wherein the bandwidth limited user equipment device has an RF bandwidth of 1.4 MHz.

5. A method for managing resources in a wireless telecommunication network (101) comprising a base station (120) operable to schedule the transmission of unicast and broadcast messages using a low complexity physical downlink control channel for a bandwidth limited user equipment device (100) in a connected mode of operation with the base station, the method comprising:
at the bandwidth limited user equipment device (100), monitoring the low complexity physical downlink control channel common search space, and decoding broadcast messages in selected subframes of the low complexity physical downlink control channel to obtain broadcast related information,
**characterised by**:
the selected subframes being broadcast subframes that are paging occasions for the bandwidth limited user equipment device.

6. A method as claimed in claim 5, wherein the bandwidth limited user equipment device is configured to monitor a low complexity enhanced physical downlink control channel.

7. A method as claimed in claim 5 or 6, wherein the selected subframes are system information block type 1 subframes for the bandwidth limited user equipment device.

8. A method as claimed in claim 5 or 6, wherein the selected subframes are system information message subframes for the bandwidth limited user equipment device.

9. A method as claimed in claim 5 or 6, wherein the bandwidth limited user equipment device is operable to prioritise low complexity physical downlink control channel common search space for random access response and subframes containing the random access response message over low complexity physical downlink control channel user equipment specific search space and unicast message.

10. A method as claimed in claim 5 or 6, wherein the bandwidth limited user equipment device is operable, in connected mode, to monitor system information block type 1 subframes.

11. A computer program product, comprising a computer usable medium having computer readable program code embodied therein, said computer readable program code adapted to be executed to implement a method for managing resources as claimed in any of claims 5 to 10.

12. A base station (120) of a wireless telecommunication network (101) in a connected mode of operation with a bandwidth limited user equipment device (100), the base station operable to schedule the transmission of unicast and broadcast messages using a low complexity physical downlink control channel, and to schedule broadcast messages comprising broadcast related information in selected subframes of the low complexity physical downlink control channel,
**characterised in that**:
the selected subframes are broadcast subframes scheduled as paging occasions for the bandwidth limited user equipment device.

## Patentansprüche

1. Bandbreiten-limitiertes Benutzerausrüstungsgerät (100) in einem mit einer Basisstation (120) eines drahtlosen Telekommunikationsnetzes (101) verbundenen Betriebsmodus, wobei die Basisstation dazu dient, das Senden von Unicast- und Broadcast-Nachrichten unter Verwendung eines Physical Downlink Control Channel geringer Komplexität zu planen,
wobei das Gerät dafür konfiguriert ist:
den gemeinsamen Suchraum des Physical Downlink Control Channel geringer Komplexität zu überwachen und an dem bandbreiten-limitierten Benutzerausrüstungsgerät Broadcast-Nachrichten in ausgewählten Subrahmen des Physical Downlink Control Channel geringer Komplexität zu decodieren, um broadcast-bezogene Informationen zu beziehen,
**dadurch gekennzeichnet, dass**:
die ausgewählten Subrahmen Broadcast-Subrahmen sind, die Paging-Anlässe für das bandbreiten-limitierte Benutzerausrüstungsgerät sind.

2. Bandbreiten-limitiertes Benutzerausrüstungsgerät nach Anspruch 1, wobei das Gerät dafür konfiguriert ist, einen Enhanced Physical Downlink Control Channel geringer Komplexität zu überwachen.

3. Bandbreiten-limitiertes Benutzerausrüstungsgerät nach Anspruch 1 oder 2, wobei das bandbreiten-limitierte Benutzerausrüstungsgerät dazu dient, zu einer gegebenen Zeit einen von einem Paar von Steuerkanälen zum Bereitstellen von Planungsinformationen unter Verwendung einer Unicast- oder Broadcast-Nachricht, die von der Basisstation gesendet wird, zu überwachen oder zu decodieren.

4. Bandbreiten-limitiertes Benutzerausrüstungsgerät nach einem vorhergehenden Anspruch, wobei das bandbreiten-limitierte Benutzerausrüstungsgerät eine RF-Bandbreite von 1,4 MHz aufweist.

5. Verfahren zum Verwalten von Ressourcen in einem drahtlosen Telekommunikationsnetz (101), das eine Basisstation (120) umfasst, die dazu dient, das Senden von Unicast- und Broadcast-Nachrichten unter Verwendung eines Physical Downlink Control Channel geringer Komplexität für ein bandbreiten-limitiertes Benutzerausrüstungsgerät (100) in einem mit der Basisstation verbundenen Betriebsmodus zu planen, wobei das Verfahren Folgendes umfasst:
Überwachen des gemeinsamen Suchraums des Physical Downlink Control Channel geringer Komplexität an dem bandbreiten-limitierten Benutzerausrüstungsgerät (100) und Decodieren von Broadcast-Nachrichten in ausgewählten Subrahmen des Physical Downlink Control Channel geringer Komplexität, um broadcast-bezogene Informationen zu beziehen,
**dadurch gekennzeichnet, dass**:
die ausgewählten Subrahmen Broadcast-Subrahmen sind, die Paging-Anlässe für das bandbreiten-limitierte Benutzerausrüstungsgerät sind.

6. Verfahren nach Anspruch 5, wobei das bandbreiten-limitierte Benutzerausrüstungsgerät dafür konfiguriert ist, einen Enhanced Physical Downlink Control Channel geringer Komplexität zu überwachen.

7. Verfahren nach Anspruch 5 oder 6, wobei die ausgewählten Subrahmen Subrahmen für Systeminformationen Typ1 für das bandbreiten-limitierte Benutzerausrüstungsgerät sind.

8. Verfahren nach Anspruch 5 oder 6, wobei die ausgewählten Subrahmen Subrahmen für Systeminformationsnachrichten für das bandbreiten-limitierte Benutzerausrüstungsgerät sind.

9. Verfahren nach Anspruch 5 oder 6, wobei das bandbreiten-limitierte Benutzerausrüstungsgerät dazu dient, Suchraum des Physical Downlink Control Channel geringer Komplexität für Direktzugriffsantwort und Suchrahmen, die die Direktzugriffsantwort-Nachricht enthalten, gegenüber dem Benutzersuchraum des Physical Downlink Control Channel geringer Komplexität und der Unicast-Nachricht zu priorisieren.

10. Verfahren nach Anspruch 5 oder 6, wobei das bandbreiten-limitierte Benutzerausrüstungsgerät dazu dient, im verbundenen Modus Subrahmen für Systeminformationen Typ1 zu überwachen.

11. Computerprogrammprodukt, ein Computer-nutzbares Medium mit darauf verkörpertem Computer-lesbarem Programmcode umfassend, wobei der Computer-lesbare Programmcode dafür eingerichtet ist, ausgeführt zu werden, um ein Verfahren zum Verwalten von Ressourcen nach einem der Ansprüche 5 bis 10 zu implementieren.

12. Basisstation (120) eines drahtlosen Kommunikationsnetzes (101) in einem mit einem bandbreiten-limitierten Benutzerausrüstungsgerät (100) verbundenen Betriebsmodus, wobei die Basisstation dazu dient, das Senden von Unicast- und Broadcast-Nachrichten unter Verwendung eines Physical Downlink Control Channel geringer Komplexität zu planen und Broadcast-Nachrichten zu planen, die broadcast-bezogene Informationen in ausgewählten Subrahmen des Physical Downlink Control Channel geringer Komplexität umfassen, **dadurch gekennzeichnet, dass**:
die ausgewählten Subrahmen Broadcast-Subrahmen sind, die als Paging-Anlässe für das bandbreiten-limitierte Benutzerausrüstungsgerät geplant sind.

## Revendications

1. Dispositif d'équipement d'utilisateur à largeur de bande limitée (100) dans un mode de fonctionnement connecté à une station de base (120) d'un réseau de télécommunication sans fil (101), la station de base étant utilisable pour planifier la transmission de messages de monodiffusion et de diffusion au moyen d'un canal de commande de liaison descendante physique de faible complexité,
le dispositif étant configuré pour :
surveiller l'espace de recherche commun du canal de commande de liaison descendante physique de faible complexité et, au niveau du dispositif d'équipement d'utilisateur à largeur de bande limitée, pour décoder des messages de diffusion dans des sous-trames sélectionnées du canal de commande de liaison descendante physique de faible complexité afin d'obtenir des informations liées à la diffusion,
**caractérisé en ce que** :
les sous-trames sélectionnées sont des sous-trames de diffusion qui sont des occasions de radiomessagerie pour le dispositif d'équipement d'utilisateur à largeur de bande limitée.

2. Dispositif d'équipement d'utilisateur à largeur de bande limitée selon la revendication 1, le dispositif étant configuré pour surveiller un canal de commande de liaison descendante physique amélioré de faible complexité.

3. Dispositif d'équipement d'utilisateur à largeur de bande limitée selon la revendication 1 ou 2, le dispositif d'équipement d'utilisateur à largeur de bande limitée étant utilisable, à un instant donné, pour surveiller ou décoder l'un ou l'autre d'une paire de canaux de commande afin de fournir des informations de planification au moyen d'un message de monodiffusion ou de diffusion transmis par la station de base.

4. Dispositif d'équipement d'utilisateur à largeur de bande limitée selon l'une quelconque des revendications précédentes, le dispositif d'équipement d'utilisateur à largeur de bande limitée ayant une largeur de bande RF de 1,4 MHz.

5. Procédé de gestion de ressources dans un réseau de télécommunication sans fil (101) comprenant une station de base (120) utilisable pour planifier la transmission de messages de monodiffusion et de diffusion au moyen d'un canal de commande de liaison descendante physique de faible complexité pour un dispositif d'équipement d'utilisateur à largeur de bande limitée (100) dans un mode de fonctionnement connecté à la station de base, le procédé comprenant :
au niveau du dispositif d'équipement d'utilisateur à largeur de bande limitée (100), la surveillance de l'espace de recherche commun du canal de commande de liaison descendante physique de faible complexité et le décodage de messages de diffusion dans des sous-trames sélectionnées du canal de commande de liaison descendante physique de faible complexité afin d'obtenir des informations liées à la diffusion,
**caractérisé par :**
**le fait que** les sous-trames sélectionnées sont des sous-trames de diffusion qui sont des occasions de radiomessagerie pour le dispositif d'équipement d'utilisateur à largeur de bande limitée.

6. Procédé selon la revendication 5, dans lequel le dispositif d'équipement d'utilisateur à largeur de bande limitée est configuré pour surveiller un canal de commande de liaison descendante physique amélioré de faible complexité.

7. Procédé selon la revendication 5 ou 6, dans lequel les sous-trames sélectionnées sont des sous-trames de bloc d'informations système de type 1 pour le dispositif d'équipement d'utilisateur à largeur de bande limitée.

8. Procédé selon la revendication 5 ou 6, dans lequel les sous-trames sélectionnées sont des sous-trames de message d'informations système pour le dispositif d'équipement d'utilisateur à largeur de bande limitée.

9. Procédé selon la revendication 5 ou 6, dans lequel le dispositif d'équipement d'utilisateur à largeur de bande limitée est utilisable pour donner la priorité à l'espace de recherche commun du canal de commande de liaison descendante physique de faible complexité pour une réponse d'accès aléatoire et à des sous-trames contenant le message de réponse d'accès aléatoire, par rapport à un espace de recherche spécifique à un équipement d'utilisateur du canal de commande de liaison descendante physique de faible complexité, et à un message de monodiffusion.

10. Procédé selon la revendication 5 ou 6, dans lequel le dispositif d'équipement d'utilisateur à largeur de bande limitée est utilisable, en mode connecté, pour surveiller des sous-trames de bloc d'informations système de type 1.

11. Produit de programme informatique, comprenant un support utilisable par ordinateur sur lequel est incorporé un code de programme lisible par ordinateur, ledit code de programme lisible par ordinateur étant apte à être exécuté pour mettre en œuvre un procédé de gestion de ressources selon l'une quelconque des revendications 5 à 10.

12. Station de base (120) d'un réseau de télécommunication sans fil (101) dans un mode de fonctionnement connecté à un dispositif d'équipement d'utilisateur à largeur de bande limitée (100), la station de base étant utilisable pour planifier la transmission de messages de monodiffusion et de diffusion au moyen d'un canal de commande de liaison descendante physique de faible complexité et pour planifier des messages de diffusion comprenant des informations liées à la diffusion dans des sous-trames sélectionnées du canal de commande de liaison descendante physique de faible complexité,
**caractérisée en ce que** :
les sous-trames sélectionnées sont des sous-trames de diffusion planifiées en tant qu'occasions de radiomessagerie pour le dispositif d'équipement d'utilisateur à largeur de bande limitée.
